# EUROPÄISCHE PATENTSCHRIFT

(11) **EP 2 276 620 B1**
(45) Veröffentlichungstag und Bekanntmachung des Hinweises auf die Patenterteilung: **20.09.2017**
(21) Anmeldenummer: 09749517.0
(22) Anmeldetag: 12.03.2009
(51) Int. Cl.: B29C 47/22, B29C 49/04

(54) **EXTRUSIONSBLASVERFAHREN FÜR KUNSTSTOFFBEHÄLTER, INSBESONDERE KUNSTSTOFFFLASCHEN**
EXTRUSION BLOW-MOLDING METHOD FOR PLASTIC CONTAINERS, PARTICULARLY PLASTIC BOTTLES
PROCÉDÉ D'EXTRUSION-SOUFFLAGE POUR RÉCIPIENTS EN MATIÈRE PLASTIQUE, EN PARTICULIER POUR BOUTEILLES EN MATIÈRE PLASTIQUE

(30) Priorität: 21.05.2008 CH 769082008
(43) Veröffentlichungstag der Anmeldung: 26.01.2011
(73) Patentinhaber: Alpla Werke Alwin Lehner GmbH & Co. KG, 6971 Hard (AT)
(72) Erfinder: KÜNZ, Johann, A-6971 Hard (AT)
(74) Vertreter: Bohest AG Branch Ostschweiz
(86) Internationale Anmeldenummer: PCT/EP2009/001773
(87) Internationale Veröffentlichungsnummer: WO 2009/141027

(56) Entgegenhaltungen:
- EP-A- 0 726 133
- EP-A- 1 533 243
- WO-A-2007/098837
- FR-A- 2 180 570
- FR-E- 61 856
- JP-A- 2008 188 773
- US-A- 3 257 482
- US-A- 6 090 338
- US-A1- 2003 000 909

## Beschreibung

Die Erfindung betrifft ein Extrusionsblasverfahren für Kunststoffbehälter, insbesondere Kunststoffflaschen, gemäss dem Oberbegriff des Patentanspruchs 1.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung fluider Substanzen, beispielsweise von Getränken, Haushaltsprodukten, Pflegeprodukten, Kosmetika usw., kommen mittlerweile hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die Herstellung von Kunststoffbehältern, insbesondere Kunststoffflaschen, beispielsweise aus Polyethylen oder Polypropylen, erfolgt oft in einem Extrusionsblasverfahren, insbesondere in einem Schlauchblasverfahren. Dabei wird von einem Extrusionskopf ein Kunststoffschlauch extrudiert, in eine Blasformwerkzeuganordnung eingebracht, über einen Blasdorn durch Überdruck aufgeblasen, abgekühlt und entformt. Die dafür eingesetzten Extrusionsblasmaschinen besitzen in der Regel wenigstens einen Extruder zur Zuführung des aufgeschmolzenen Kunststoffmaterials. Der Ausgang des Extruders ist mit dem Extrusionskopf verbunden, der eine Extrusionsdüse mit einem Ringspalt aufweist, dessen Weite über einen relativ zur Extrusionsdüse axial verstellbaren Dorn regulierbar ist. Die Extrusion des Kunststoffschlauchs erfolgt kontinuierlich oder quasikontinuierlich in einer oder in mehreren Schichten. Der extrudierte Kunststoffschlauch wird an eine Blasformwerkzeuganordnung übergeben und mit Hilfe eines in den Formhohlraum eingefahrenen Blasdorns durch Überdruck aufgeblasen. Danach wird der gemäss dem Formhohlraum aufgeblasene Kunststoffbehälter aus der Formkavität entformt.

Beim Aufblasen wird der in den Formhohlraum eingebrachte Kunststoffschlauch je nach der Geometrie des zu erzeugenden Kunststoffbehälters unterschiedlich stark verstreckt. Um zu verhindern, dass dadurch an kritischen Stellen, beispielsweise an Kanten oder Ecken, die erforderliche Mindestwandstärke unterschritten wird, wurde in der Vergangenheit die Wandstärke des extrudierten Kunststoffschlauchs gesamthaft derart eingestellt, dass nach dem Blasvorgang in jedem Fall auch an den stärker verstreckten Stellen des Kunststoffbehälters eine ausreichend grosse Wandstärke verbleibt. Auch bei der Herstellung von Kunststoffbehältern, die designbedingt in definierten Bereichen ihrer axialen und in Umfangsrichtung verlaufenden Erstreckung eine gewisse Mindestwandstärke nicht unterschreiten dürfen, um eine ausreichend grosse Festigkeit aufzuweisen, orientierte sich vielfach die Gesamtwandstärke des extrudierten Kunststoffschlauchs an der Erreichung der geforderten Mindestwandstärke. Es ist unmittelbar einsichtig, dass dadurch der Materialverbrauch in nicht zu vernachlässigender Weise erhöht wird.

Zur Einsparung von Material sind daher bereits verschiedene Verfahrensvarianten vorgeschlagen worden, um einerseits eine möglichst gleichmässige Wandstärkenverteilung sowohl in Längs- als auch in Umfangsrichtung zu erreichen und andererseits die Wandstärke bestimmter kritischer Bereiche gezielt zu erhöhen. So ist beispielsweise in der DE 199 03 084 vorgeschlagen, die Austrittsdüse des Extrusionskopfes mit einer elastisch deformierbaren Hülse auszustatten. Die Hülse wird an einander gegenüberliegenden Seiten von zwei Stellzylindern beaufschlagt und im gewünschten Umfang verformt. Der vom Dorn und von der Hülse begrenzte Ringspalt ist durch die radiale Deformierung der elastischen Hülse veränderbar. Dadurch kann am extrudierten Kunststoffschlauch Material werden und in die gewünschten Bereiche gedrückt werden. Alternativ dazu oder in Ergänzung kann der Dorn einen statisch oder dynamisch partiell verstellbaren Umfangsbereich aufweisen. Derartige Vorschläge sind beispielsweise aus der DE 199 04 199 oder der DE 199 29 381 bekannt. Diese Verfahren und Anordnungen sind nur für die Herstellung relativ grosse Kunststoffbehälter, wie beispielsweise Kanister, Kunststofffässer oder dergleichen, anwendbar. Die Stellzylinder für die gezielte Deformierung der elastischen Hülse nehmen relativ viel Platz ein. Daher ist die Anordnung für Extruderköpfe, mit denen gleichzeitig mehrere parallel zueinander verlaufende Kunststoffschläuche extrudiert werden, um dann in ein Mehrfachblaswerkzeug eingesetzt zu werden, nicht geeignet. Die Anordnung ist behälterspezifisch ausgelegt. Eine Umrüstung auf einen anderen Behältertyp ist nur sehr schwer und umständlich bewerkstelligbar, ist zeitaufwändig und kostspielig.

Aus der EP 1 685 943 ist ein Extrusionskopf bekannt, deren sich konisch zum Auslass verjüngende Austrittsdüse mit einem axial verstellbaren Dorn zusammenwirkt, um die Weite des Ringspalts zu verändern. Der Dorn ist mit einem konzentrisch angeordneten Stempel ausgestattet, der nicht notwendigerweise rotationssymmetrisch ausgebildet sein muss und mittels eines hydraulischen Stellmechanismus gegenüber dem Dorn axial verstellbar ist. Durch das Ausfahren des Stempels kann die vom Dorn und der Austrittsdüse festgelegte Spaltweite bei Bedarf zusätzlich verjüngt werden. Dadurch soll das Material des durch den Ringspalt extrudierten Kunststoffschlauchs verdrängt und im gewünschten Umfang umverteilt werden. Diese "Stempel in Dorn" Variante ist aufwändig in der Konstruktion und kostspielig. Der Dorn weist wegen des darin eingebetteten Stempels und des Stellmechanismus einen relativ grossen Aussendurchmesser auf. Daher ist auch diese Vorrichtung des Stands der Technik nur für die Herstellung relativ grosser Kunststoffbehälter, wie z.B. Kunststofffässer, Kunststofftanks oder dergleichen geeignet. Die Vorrichtung ist für einen spezifischen Behältertyp ausgelegt; ein Umrüsten ist sehr zeitaufwändig und kostspielig. WO 2007/098837 offenbart ein Extrusionsblasverfahren für Kunststoffbehälter, insbesondere Kunststoffflaschen, bei dem ein ein- oder mehrschichtiger Kunststoffschlauch unter einem vorgegebenen Extrusionsdruck durch einen Ringspalt, der von einer an einem Extrusionskopf vorgesehenen Extrusionsdüse und einem vorzugsweise axial verstellbaren Dorn begrenzt und hinsichtlich seiner Weite verstellbar ist, extrudiert, in eine Formkavität einer Blasformwerkzeuganordnung eingebracht und durch Überdruck gemäss der Formkavität zu einem Kunststoffbehälter aufgeblasen und entformt wird, wobei dem extrudierten Kunststoffschlauch in einem Abstand von 0,5 mm bis 3 mm von der Mündung der Extrusionsdüse bei Bedarf wenigstens bereichsweise zusätzliches Kunststoffmaterial zudosiert wird. Es ist daher Aufgabe der vorliegenden Erfindung, ein Extrusionsverfahren für Kunststoffbehälter, insbesondere für Kunststoffflaschen, zu schaffen, das es erlaubt, auch für die Herstellung von kleinen Behältergrössen die Wandstärke des extrudierten Kunststoffschlauchs gezielt zu beeinflussen. Dabei soll es möglich sein, die Wandstärke des Kunststoffschlauchs zu optimieren und dennoch in kritischen Bereichen ausreichend Material zu Verfügung zu haben, damit der aufgeblasene Kunststoffbehälter überall die erforderliche Wandstärke bzw. die geforderten Festigkeiten aufweist. Das Verfahren soll auch für die parallele Extrusion mehrerer Kunststoffschläuche aus einem Mehrfachextrusionskopf geeignet sein. Der Extrusionskopf soll einfach, schnell und kostengünstig für andere Behältertypen umrüstbar sein.

Die Lösung dieser Aufgaben besteht in einem Extrusionsblasverfahren für Kunststoffbehälter, insbesondere für Kunststoffflaschen, mit den in Patentanspruch 1 angeführten Verfahrensschritten. Weiterbildungen und/oder vorteilhafte Ausführungsvarianten der Erfindung sind Gegenstand der abhängigen Ansprüche. Die Erfindung schlägt ein Extrusionsblasverfahren für Kunststoffbehälter, insbesondere Kunststoffflaschen, vor, bei dem ein ein- oder mehrschichtiger Kunststoffschlauch unter einem vorgegebenen Extrusionsdruck durch einen Ringspalt, der von einer an einem Extrusionskopf vorgesehenen Extrusionsdüse und einem vorzugsweise axial verstellbaren Dorn begrenzt und hinsichtlich seiner Weite verstellbar ist, extrudiert wird. Der extrudierte Kunststoffschlauch wird in eine Formkavität einer Blasformwerkzeuganordnung eingebracht und durch Überdruck gemäss der Formkavität zu einem Kunststoffbehälter aufgeblasen und dann entformt. Bei Bedarf wird dem extrudierten Kunststoffschlauch in unmittelbarer Nachbarschaft der Mündung der Extrusionsdüse wenigstens bereichsweise zusätzliches Kunststoffmaterial beigemengt. Das zusätzliche Kunststoffmaterial wird unter einem gegenüber dem Extrusionsdruck erhöhten Druck durch eine oder mehrere über den Umfang verteilte Abgabedüsen derart in den extrudierten Kunststoffschlauch eingebracht, dass das Kunststoffmaterial lokal komprimiert wird und nach dem Passieren der Extrusionsdüse der Kunststoffschlauch an den mit zusätzlichem Kunststoffmaterial versehenen Bereichen eine grössere Wandstärke aufweist als der übrige Kunststoffschlauch.

Zum Unterschied von den aus dem Stand der Technik bekannten Verfahren erfolgt bei dem erfindungsgemässen Extrusionsblasverfahren die Materialverteilung nicht durch Materialverdrängung. Vielmehr wird gerade in denjenigen Bereichen des extrudierten Kunststoffschlauchs, die beim Aufblasen zu kritischen Wandstärken und mangelnden Festigkeiten des hergestellten Kunststoffbehälters führen könnten, zusätzliches Kunststoffmaterial hinzugefügt. Dadurch kann der Kunststoffbehälter noch besser hinsichtlich des Materialeinsatzes optimiert werden. Der Kunststoffschlauch wird mit einer Wandstärke extrudiert, die gerade so gross ist, dass der daraus aufgeblasene Behälter in allen unkritischen Bereichen die geforderten Mindestwandstärken und Festigkeiten aufweist. Überall dort, wo es bei der durch den Blasvorgang hervorgerufenen Verstreckung des Materials zu einer Unterschreitung der Mindestwandstärke kommen könnte, wird gezielt zusätzliches Kunststoffmaterial hinzugefügt. Die beigemengte Kunststoffmenge entspricht dabei gerade der für die Erreichung der geforderten Wanddicke und Festigkeiten erforderlichen zusätzlichen Menge. Das zusätzliche Kunststoffmaterial wird dabei unter Überdruck in unmittelbarer Nachbarschaft zur Mündung der Extrusionsdüse dem extrudierten Kunststoffschlauch beigemengt. Der Druck, mit dem das zusätzliche Kunststoffmaterial in den extrudierten Kunststoffschlauch eingepresst wird, ist grösser als der generelle Extrusionsdruck und führt lokal zu einer kurzfristigen Komprimierung des Kunststoffmaterials. Nach dem Passieren der Mündung der Extrusionsdüse expandieren die komprimierten Bereiche, und der Kunststoffschlauch weist - wie beabsichtigt - lokal eine grössere Wandstärke auf als in seinen übrigen Bereichen.

Das erfindungsgemässe Verfahren kommt ohne zusätzliche Stellmittel für eine Verstellung der Ringspaltweite der Extrusionsdüse aus. Auch wird kein Stellmechanismus für eine Axialverstellung eines im Dorn angeordneten Stempels oder dergleichen benötigt. Dadurch können die Extrusionsdüse und der Dorn, welche die Weite des Ringspalts begrenzen, deutlich kleiner ausgebildet sein. Dies ermöglicht insbesondere auch die Herstellung kleinerer Behälter, beispielsweise von Kunststoffflaschen von 3 I Aufnahmevolumen und kleiner. Die zusätzlichen Stelltriebe und -mechanismen im Extrusionskopf entfallen. Dadurch können am Extrusionskopf mehrere Extrusionsdüsen mit zugeordneten Dornen angeordnet sein, durch welche gleichzeitig mehrere Kunststoffschläuche extrudiert werden können. Nachdem komplexe Stelltriebe und -mechanismen für elastisch deformierbare Hülsen oder für gegenüber dem Dorn ausfahrbare Stempel und zugehörige Bohrungen für hydraulische Steuerungen und dergleichen entfallen, kann der Extrusionskopf bei Bedarf auch relativ einfach und kostengünstig auf andere Behältertypen umgebaut werden. Dies erhöht die Flexibilität und die Wirtschaftlichkeit des Einsatzes der Extrusionsblasmaschine noch zusätzlich. Die zusätzliche Abgabedüse in Nachbarschaft zur Mündung der Extrusionsdüse kann ringförmig ausgebildet sein. Dies ermöglicht die Ausbildung von ringförmig verdickten Bereichen ohne die von der Extrusionsdüse und dem Dorn begrenzte Ringspaltweite verändern zu müssen.

Das zusätzliche Kunststoffmaterial wird in einem Abstand von 2 mm bis 20 mm von der Mündung der Extrusionsdüse zudosiert. Ein kürzerer Abstand der Abgabedüse(n) von der Mündung der Extrusionsdüse ergibt am extrudierten Kunststoffschlauch einen relativ abrupten Übergang in der Wandstärke. Bei grösseren Abständen erfolgt die Wandstärkenänderung verlaufend.

Der Druck, mit dem das zusätzliche Kunststoffmaterial in den extrudierten Kunststoffschlauch eingepresst wird, liegt um ca. 20% bis 150% höher als der Extrusionsdruck. Bei einem generellen Extrusionsdruck von beispielsweise 40 bar kann der Druck, mit dem das zusätzliche Kunststoffmaterial in den Kunststoffschlauch eingepresst wird, bis zu 100 bar betragen. Bei höheren Extrusionsdrücken sind die Druckunterschiede entsprechend geringer.

Im allgemeinen erfolgt die Beimengung von zusätzlichem Kunststoffmaterial nicht durch eine einzige Abgabedüse; vielmehr sind mehrere Abgabedüsen vorgesehen, die über den Umfang verteilt sind und/oder einen verschieden grossen Abstand von der Mündung der Extrusionsdüse aufweisen.

Während der Kunststoffschlauch zweckmässigerweise kontinuierlich extrudiert wird, erweist es sich für die Erstellung möglichst kurzer Übergänge zu den Bereichen grösserer Wandstärke als zweckmässig, wenn das zusätzliche Kunststoffmaterial zeitlich gesteuert aus wenigstens einem Zwischenspeicher im Extrusionskopf zudosiert wird. Die Verwendung wenigstens eines Zwischenspeichers erlaubt wesentlich kürzere Kanallängen, in welche das zusätzliche Kunststoffmaterial für die Erstellung der Bereiche mit grösserer Wandstärke eingebracht werden muss. Im Zwischenspeicher ist immer ausreichend Kunststoffmaterial vorhanden, welches durch die Abgabedüsen ausgepresst wird, sobald der Druckzylinder neues Kunststoffmaterial in den Zwischenspeicher einpresst. Der Druckzylinder für die Zudosierung des zusätzlichen Kunststoffmaterials muss auch nicht innerhalb des Extrusionskopfes angeordnet sein, sondern kann auch an einer anderen geeigneten Stelle der Extrusionsblasmaschine angeordnet sein. Für die Beschickung jedes Zwischenspeichers mit Kunststoffmaterial ist ein separater Extruder vorgesehen.

In einer Ausführungsvariante der Erfindung wird das zusätzliche Kunststoffmaterial durch eine oder mehrere über den Umfang verteilte Abgabedüsen ausgepresst, die einzeln oder in Gruppen von verschiedenen Zwischenspeichern mit Kunststoffmaterial versorgt werden. Die Abgabedüsen können auch verschieden grosse Abstände von der Mündung der Extrusionsdüse aufweisen und in Umfangsrichtung artikelabhängig gegeneinander versetzt sein. Beispielsweise weist eine erste Reihe zwei einander diametral gegenüberliegende Abgabedüsen auf. In einer zweiten Reihe sind eine oder zwei weitere Abgabedüsen angeordnet, welche artikelabhängig gegenüber denjenigen der ersten Reihe versetzt sind. Beispielsweise kann der Versatz ca. 90° betragen. Auf diese Weise kann beispielsweise mit der ersten Reihe von Abgabedüsen kritischen Bereichen an Übergängen vom Behälterkörper zum Boden oder zum Deckenbereich Rechnung getragen werden, während mit der in Umfangsrichtung versetzten Abgabedüse in der zweiten Reihe beispielsweise ein Bereich geringerer Eigensteifigkeit unterhalb des Ausgiessstutzens einer Kunststoffflasche berücksichtigt und daher mit einer grösseren Wandstärke versehen wird. Die Abgabedüsen der beiden Reihen werden bei Bedarf jeweils von einem eigenen Zwischenspeicher mit Kunststoffmaterial versorgt. Die Zwischenspeicher werden von separaten Extrudern mit Material beschickt.

Das zusätzliche Kunststoffmaterial wird beispielsweise in einem oder mehreren ringförmigen Räumen zwischengespeichert, der bzw. die in einem Abschnitt des Extrusionskopfes angeordnet ist bzw. sind, der den Dorn umgibt. Jeder Zwischenspeicher ist mit wenigstens einer der Abgabedüsen verbunden. Durch diese Anordnung ist der Extrusionskopf, der üblicherweise modulartig aus verschiedenen Bauelementen zusammengesetzt ist, bei Bedarf sehr einfach auf eine neue Konfiguration umbaubar.

Bei mehrschichtig extrudierten Kunststoffschläuchen kann vorgesehen sein, dass jeder der Extrusionsdüsen für eine Schicht wenigstens ein Abgabedüse zugeordnet ist, die es erlaubt, der jeweiligen Schicht bei Bedarf wenigstens bereichsweise zusätzliches Kunststoffmaterial zuzudosieren. Üblicherweise sind das Kunstoffmaterial, aus dem die jeweilige Schicht des extrudierten Kunststoffschlauchs besteht, und das zudosierte zusätzliche Kunststoffmaterial die gleichen Materialen. Die erfindungsgemässe Verfahrensführung erlaubt aber auch die bereichsweise Zugabe von davon verschiedenen Kunststoffmaterialien, welche mit dem Kunststoffmaterial der jeweiligen Schicht kompatibel sind. Dies kann beispielsweise erwünscht sein, um dem aus dem extrudierten Kunststoffschlauch hergestellten Kunststoffbehälter bereichsweise ganz spezifische Eigenschaften zu verleihen. Beispielsweise können auf diese Weise mechanische und chemische Eigenschaften bereichsweise gezielt beeinflusst werden.

In Abhängigkeit vom Schichtmaterial des extrudierten Kunststoffschlauchs wird das beigemengte zusätzliche Kunststoffmaterial aus der Gruppe bestehend aus Polyolefinen, Mischungen aus Polyolefinen, thermoplastischem PE, HDPE, LDPE, oder blasbarem PET gewählt.

Falls es gewünscht ist, kann auch ein Kunststoffmaterial zudosiert werden, dessen Farbe von der Farbe des übrigen Kunststoffschlauchs verschieden ist. Dies kann beispielsweise nur aus ästhetischen Gründen der Fall sein. Es kann aber auch beabsichtigt sein, dem Benutzer durch farbliche Absetzung bestimmter Bereiche eine ganz bestimmte Handhabung des Behälters nahezulegen. Beispielsweise können verstärkte Bereiche, die sich für die Handhabung besonders anbieten, durch besondere Farbgestaltung hervorgehoben werden, usw.

Eine Verfahrensvariante sieht vor, dass der Kunststoffschlauch mehrschichtig extrudiert wird. Dabei umfasst wenigstens eine der Kunststoffschichten, welche üblicherweise keine Aussenschicht des Kunststoffschlauchs bildet, sogenanntes Mühlenregeneratmaterial. Mühlenregeneratmaterial wird aus bei der Behälterherstellung anfallendem "Abfallmaterial", beispielsweise aus abgeschnittenen verlorenen Köpfen, vom Boden des Behälters abstehenden Stutzen usw. hergestellt. Da dieses Material den Herstellungsprozess bereits einmal durchlaufen hat, kann es Farbschwankungen aufweisen. Daher erweist es sich von Vorteil, wenn dieses Material in einer der Zwischenschichten eingesetzt wird. Bei dunkel eingefärbten Kunststoffen kann Mühlenregenerat auch für Aussenschichten verwendet werden. In diesem Fall kann das Mühlenregenerat auch für die Zudosierung des zusätzlichen Kunststoffmaterials zur Erhöhung der Wandstärke eingesetzt werden.

Wegen der besonders platzsparenden Ausbildung des Extrusionskopfes eignet sich die erfindungsgemässe Verfahrensführung besonders für Mehrfachextrusionsköpfe, bei denen mehrere Extrusionsdüsen vorgesehen sind, durch welche gleichzeitig mehrere im wesentlichen parallel zueinander angeordnete Kunststoffschläuche ein- oder mehrschichtig extrudiert werden. Jeder Schicht der extrudierten Kunststoffschläuche kann bei Bedarf wenigstens bereichsweise zusätzliches Kunststoffmaterial beigemengt werden. Die extrudierten Kunststoffschläuche werden dann an ein Mehrfachwerkzeug übergeben, in dem aus den Schlauchabschnitten gleichzeitig mehrere Kunststoffbehälter aufgeblasen werden, die nach ihrer Fertigstellung entformt werden.

Weitere Vorteile und Merkmale der Erfindung ergeben sich aus der nachfolgenden Beschreibung von Ausführungsbeispielen unter Bezugnahme auf die schematischen Zeichnungen. Es zeigen in nicht massstabsgetreuer Darstellung:
- Fig. 1: eine schematische Darstellung einer Extrusionsblasmaschine mit Extrusionskopf und Blasformwerkzeug;
- Fig. 2: eine schematische Axialschnittdarstellung eines Teils des Extrusionskopfes mit einem von einer Extrusionsdüse und einem Dorn begrenzten Ringspalt; und
- Fig. 3: einen schematischer Querschnitt durch den Extrusionskopf im Bereich von in den Ringspalt mündenden Abgabedüsen.

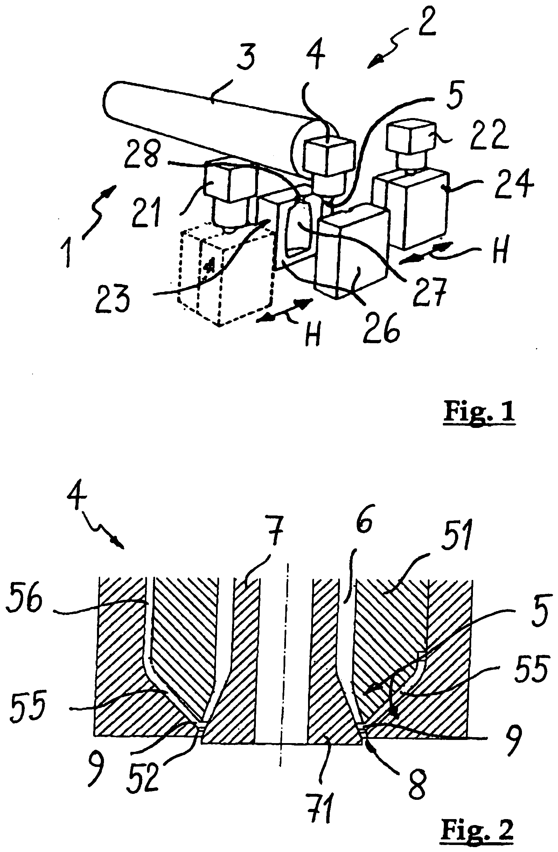

Eine in Fig. 1 im Prinzip dargestellte Extrusionsblasmaschine ist gesamthaft mit dem Bezugszeichen 1 versehen. Der prinzipielle Aufbau derartiger Langhub-Extrusionsblasmaschinen ist hinlänglich bekannt und beispielsweise in "Blow molding handbook, edited by Donald V. Rosato and Dominick V. Rosato, 1989, ISBN 1-56990-089-2, Library of Congress Catalogue Card Number 88-016270" beschrieben. Die Darstellung in Fig. 1 beschränkt sich daher auf die für das Verständnis unbedingt erforderlichen Bestandteile der Extrusionsblasmaschine 1. Die beispielsweise dargestellte Zweistationenblasmaschine weist eine Extrusionseinheit 2 und zwei Blasstationen 21, 22 auf. Die Extrusionseinheit 2 umfasst wenigstens einen Extruder 3 für Kunststoffgranulat und einen damit verbundenen Extrusionskopf 4, der wenigstens eine Extrusionsdüse 5 aufweist. Jede Blastation 21, 22 ist mit einem Blasformtisch 23, 24 ausgestattet, in dem Blasformwerkzeuge 26 montiert sind. Die Blasformwerkzeuge 26 umschliessen jeweils wenigstens eine Blasformkavität 27, die der Form des herzustellenden Hohlkörpers, beispielsweise einer Flasche, entspricht. Die Blasformkavitäten 27 besitzen an ihrer dem Extrusionskopf 4 zugewandten Oberseite eine Mündung 28. Diese dient zum Einfahren eines Blasdorns, der in einem Blaskopf der jeweiligen Blasstation 21, 22 vorgesehen ist. Die Blasformtische 23, 24 sind abwechselnd aus ihren seitlichen Endpositionen in den Blasstationen 21, 22 in eine Position verschiebbar, in der die Mündung des Blasformwerkzeugs 26 mit dem Ausgang der Extrusionsdüse 5 axial fluchtet. Die seitliche Verschiebung der Blasformtische 23, 24 erfolgt dabei im wesentlichen senkrecht zur Längserstreckung des Extruders 3 und ist in Fig. 1 jeweils durch Doppelpfeile H angedeutet.

Das über den Extruder 3 zugeführte Kunststoffgranulat wird im Extruder 3 und/oder im Extrusionskopf 4 aufgeschmolzen und durch einen Ringspalt der Extrusionsdüse 5 als endloser Kunststoffschlauch extrudiert. Der Kunststoffschlauch kann ein- oder mehrschichtig extrudiert werden. Für die Extrusion eines mehrschichtigen Kunststoffschlauchs sind weitere Extruder vorgesehen, welche die erforderlichen unterschiedlichen Kunststoffmaterialien zum Extrusionskopf 4 transportieren. Die Blasformtische 23, 24 mit den Blasformwerkzeugen 26 werden abwechselnd aus ihren Endpositionen in den Blasstationen 21, 22 seitlich unter den Extrusionskopf 4 bewegt, die Blasformwerkzeuge 26 geöffnet und ein Stück des extrudierten Kunststoffschlauchs abgeholt. Danach wird der jeweilige Blasformtisch 23, 24 wieder in seine Endposition in der Blasstation 21 bzw. 22 zurückbewegt. Dort wird dann mit Hilfe eines durch die Mündung 28 in die Kavität 27 eingefahrenen Blasdorns der Hohlkörper durch Überdruck aufgeblasen. Dabei wird üblicherweise gleichzeitig der Ausgiessstutzen bzw. der Flaschenhals mit der Ausgiessöffnung kalibriert. Der fertige Hohlkörper wird ausgestossen und der Zyklus wiederholt. Während in der einen Blasformstation 21 ein Schlauch in der Formkavität aufgeblasen wird, wird der Blasformtisch 24 der zweiten Blasstation 22 seitlich unter den Extrusionskopf 4 bewegt, um ein weiteres Stück des extrudierten Kunststoffschlauchs abzuholen. Auf diese Weise ist ein kontinuierlicher Betrieb ermöglicht.

Fig. 2 zeigt eine Schnittdarstellung eines unteren Abschnitts des Extrusionskopfes 4 mit der Extrusionsdüse 5. Die Extrusionsdüse 5 umfasst einen Düsenkörper 51 und einen zentralen Extrusionskanal 6, in dem ein koaxial angeordneter Dorn 7 mit einer kegelstumpfförmigen Erweiterung 71 höhenverstellbar geführt ist. Der Düsenkörper 51 und der Dorn 7 sind vorzugsweise auswechselbar im Extrusionskopf 4 montiert. Durch die Höhenverstellung des Dorns 7 ist die Weite eines Ringspalts 8 verstellbar, der von der Extrusionsdüse 5 und dem Dorn 7 begrenzt wird. Damit kann bei Bedarf die Dicke des extrudierten Kunststoffschlauchs variiert werden. In einem dem freien Ende des Dorns 7 zugewandten Endabschnitt des Düsenkörpers 51 ist ein ringförmiger Raum 55 ausgespart, der als Zwischenspeicher dient und über einen Zuführkanal 56 mit geschmolzenem Kunststoffmaterial beschickt wird. Ein an geeigneter Stelle des Extrusionskopfes angeordneter Förderzylinder sorgt dafür, dass der Zwischenspeicher immer ausreichend gefüllt ist. Der ringförmige Raum 55 steht über eine oder mehrere Abgabedüsen 9 mit dem zentralen Extrusionskanal 6 in Verbindung. Die Abgabedüsen 9 sind beispielsweise als Ringspaltsegmente ausgebildet. Üblicherweise sind zwei oder mehrere Abgabedüsen 9 vorgesehen, die ringförmig um den Dorn 7 angeordnet sind. Die Abgabedüsen 9 sind in unmittelbarer Nachbarschaft zum Ringspalt 8 angeordnet. Der Abstand der Austrittsöffnungen 9 von der Mündung 52 der Extrusionsdüse 5 kann ca. 2 mm bis 20 mm betragen.

In einer nicht näher dargestellten Ausführungsvariante der Erfindung können eine oder mehrere Abgabedüsen zu Gruppen zusammengefasst sein, die ringförmig entlang eines Umfangskreises des Düsenkörpers angeordnet sind und/oder verschieden grosse Abstände von der Mündung der Extrusionsdüse aufweisen. Die Abgabedüsen sind einzeln oder gruppenweise mit verschiedenen Zwischenspeichern verbunden, aus denen bei Bedarf das zusätzliche Kunststoffmaterial zugeführt wird. Jeder Zwischenspeicher wird von einem eigenen Extruder mit aufgeschmolzenem Kunststoffmaterial versorgt. Im Fall mehrerer Ringe von Abgabedüsen sind diese üblicherweise artikelspezifisch in Umfangsrichtung gegeneinander versetzt angeordnet. Beispielsweise sind in einer ersten Reihe zwei Abgabedüsen angeordnet, die einander diametral gegenüber liegen. In der einen grösseren Abstand von der Mündung der Extrusionsdüse aufweisenden zweiten Reihe sind eine oder mehrere weitere Abgabedüsen vorgesehen, die gegenüber den Abgabedüsen der ersten Reihe in Umfangsrichtung versetzt angeordnet sind.

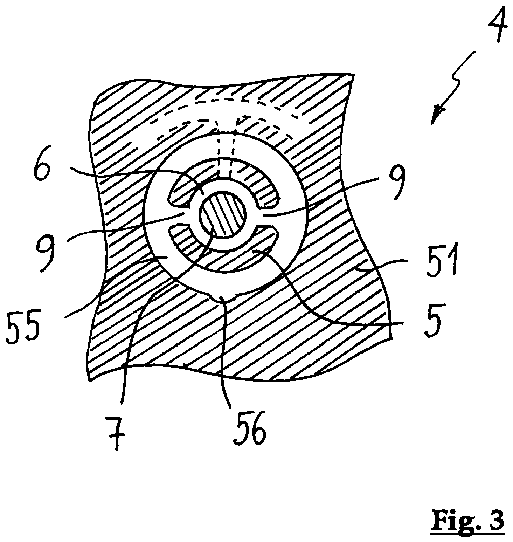

In Fig. 3 ist ein Querschnitt eines weiteren Ausführungsbeispiels eines Extrusionskopfes 4 dargestellt. Die schematische Darstellung zeigt den von der Extrusionsdüse 5 und dem Dorn 7 begrenzten zentralen Extrusionskanal 6 in Höhe einer ersten ringförmigen Anordnung von Abgabedüsen 9. Gleiche Bauteile tragen jeweils gleiche Bezugszeichen wie in den übrigen Figuren. Die zwei einander etwa diametral gegenüberliegenden Abgabedüsen 9 sind mit dem als Zwischenspeicher dienenden Ringraum 55 verbunden. Der vertikal im Düsenkörper 51 verlaufende Zuführkanal ist bei 56 angedeutet. Strichliert angedeutet ist eine weitere Abgabedüse, die einen grösseren Abstand von der Mündung der Extrusionsdüse 5 aufweist und demnach in dem dargestellten Ausführungsbeispiel oberhalb der Zeichenebene liegen würde. Diese weitere Abgabedüse ist gegenüber den in der Zeichenebene liegenden Abgabedüsen 9 um etwa 90° in Umfangsrichtung versetzt und steht mit einem weiteren ringförmigen Zwischenspeicher für aufgeschmolzenes Kunststoffmaterial in Verbindung, der in Fig. 3 ebenfalls strichliert angedeutet ist.

Das Material für den am Ringspalt 8 des Extrusionskopfes 4 extrudierten ein- oder mehrschichtigen Kunststoffschlauch wird vorzugsweise kontinuierlich durch den zentralen Extrusionskanal 6 gefördert. Dazu wird das Kunststoffmaterial, das üblicherweise zunächst in Granulatform vorliegt, in einen Extruder eingespeist, aufgeschmolzen und zum Extrusionskopf 4 transportiert. Für eine mehrschichtige Extrusion sind üblicherweise mehrere Extruder vorgesehen, welche das Material in aufgeschmolzenem Zustand zum Extrusionskopf transportieren, wo es durch im wesentlichen ringförmige Zuführöffnungen, die hintereinander angeordnet sind, in den zentralen Extrusionskanal 6 eingespeist wird. Durch eine Höhenverstellung des koaxial im zentralen Extrusionskanal 6 angeordneten Dorns 7 sind die Weite des von der Extrusionsdüse 5 und dem Dorn 7 begrenzten Ringspalts 6 und damit die Wandstärke des extrudierten Kunststoffschlauchs bei Bedarf einstellbar. Die ringförmig über den Umfang verteilten Abgabedüsen 9, die mit dem ringförmigen Raum 55, der als Zwischenspeicher für zusätzliches Kunststoffmaterial dient, in Verbindung stehen, erlauben es, den extrudierten Kunststoffschlauch bereichsweise mit einer grösseren Wandstärke zu versehen. Dazu wird zu dem kontinuierlich extrudierten Kunststoffschlauch zeitlich gesteuert durch die Abgabedüsen 9 zusätzliches Kunststoffmaterial hinzugefügt. Das zusätzliche Kunststoffmaterial wird mit einem deutlich höheren Druck als der Extrusionsdruck in den an den Abgabedüsen 9 vorbeigeführten Kunststoffschlauch eingepresst und führt in diesen Bereichen zu einer temporären Kompression des Kunststoffmaterials des Schlauchs. Der Druck, mit dem das zusätzliche Kunststoffmaterial in den extrudierten Kunststoffschlauch eingepresst wird, liegt typischerweise um 20% bis 150% höher als der Extrusionsdruck. Bei einem generellen Extrusionsdruck von beispielsweise 40 bar kann der Druck, mit dem das zusätzliche Kunststoffmaterial in den Kunststoffschlauch eingepresst wird, bis zu 100 bar betragen. Bei höheren Extrusionsdrücken sind die Druckunterschiede entsprechend geringer. Nach dem Passieren des Ringspalts 8 können diese Bereiche wieder expandieren. Das Ergebnis ist ein extrudierter Kunststoffschlauch, der in definierten Bereichen eine grössere Wandstärke aufweist als im übrigen Kunststoffschlauch.

Die Abgabedüsen für zusätzliches Kunststoffmaterial können auch einzeln oder in Gruppen mit verschiedenen Zwischenspeichern für das aufgeschmolzene Material verbunden sein, um eine noch grössere Flexibilität für die artikelspezifische Materialzugabe zu erhalten.

Das zusätzlich auf den extrudierten Kunststoffschlauch aufgebrachte Kunststoffmaterial ist in der Regel das selbe Material wie das Schlauchmaterial. Es kann aber auch ein vom Schlauchmaterial verschiedenes Material hinzugefügt werden, welches kompatibel mit dem Schlauchmaterial ist. Dies kann beispielsweise erwünscht sein, um dem aus dem extrudierten Kunststoffschlauch hergestellten Kunststoffbehälter bereichsweise ganz spezifische Eigenschaften zu verleihen. Beispielsweise kann auf diese Weise ein Greifbereich erstellt werden, der bessere Haftungseigenschaften aufweist als der übrige Behälter, usw. In Abhängigkeit vom Material des extrudierten Kunststoffschlauchs wird das beigemengte zusätzliche Kunststoffmaterial aus der Gruppe bestehend aus Polyolefinen, Mischungen aus Polyolefinen, thermoplastischem PE, HDPE, LDPE, oder blasbarem PET gewählt.

Falls es gewünscht ist, kann auch ein Kunststoffmaterial zudosiert werden, dessen Farbe von der Farbe des übrigen Kunststoffschlauchs verschieden ist. Dies kann beispielsweise nur aus ästhetischen Gründen der Fall sein. Es kann aber auch beabsichtigt sein, dem Benutzer durch farbliche Absetzung bestimmter Bereiche eine ganz bestimmte Handhabung des Behälters nahezulegen. Beispielsweise können verstärkte Bereiche, die sich für die Handhabung besonders anbieten, durch besondere Farbgestaltung hervorgehoben werden, usw.

Das erfindungsgemässe Verfahren erlaubt es, einen ein- oder mehrschichtig extrudierten Kunststoffschlauch bereichsweise und schichtspezifisch gezielt mit einer grösseren Wandstärke herzustellen. Dadurch soll beispielsweise designbedingten Schwachstellen und kritischen Stellen hinsichtlich der Wandstärke bei verschiedenen Behältergeometrien Rechnung getragen werden. Das Verfahren erlaubt es aber auch, die mechanischen und chemischen Eigenschaften bestimmter Bereiche und Schichten des herzustellenden Behälters gezielt zu beeinflussen oder auch mit einer anderen Farbe herzustellen. Je nach Abstand der Abgabedüsen von der Mündung der Extrusionsdüse für die jeweilige Schicht des extrudierten Kunststoffschlauchs können die Wandstärkenübergänge im wesentlichen abrupt oder verlaufend hergestellt werden. Für die Umsetzung des Verfahrens sind keine besonders aufwändigen Umbauten des Extrusionskopfes erforderlich. Die zusätzlichen Komponenten mit Zwischenspeicher und Abgabedüsen sind auch bei bestehenden Extruderköpfen nachrüstbar. Sie sind platzsparend, weshalb sich das erfindungsgemässe Verfahren insbesondere auch für Mehrfachextrusionsköpfe für Mehrfachwerkzeuge eignet. Die platzsparende Anordnung erfordert keine Mindestgrösse der herzustellenden Behälter, sondern erlaubt es, das erfindungsgemässe Verfahren auch bei der Herstellung von Kunststoffbehältern, insbesondere Kunststoffflaschen mit kleinen Volumina einzusetzen.

Das erfindungsgemässe Verfahren ist am Beispiel einer Zweistationenextrusionsblasmaschine erläutert worden. Es versteht sich, dass grundsätzlich jede Art von Extrusionsblasmaschine, insbesondere auch solche, die nach der Radtechnologie arbeiten, umgerüstet werden kann, um darauf nach dem erfindungsgemässen Verfahren Kunststoffbehälter, insbesondere Kunststoffflaschen zu erzeugen. Der Extrusionskopf kann einen zentralen Extrusionskanal aufweisen, der sich, wie in den dargestellten Ausführungsbeispielen geschildert, in Extrusionsrichtung erweitert. Der Extrusionskanal kann sich in Extrusionsrichtung aber auch verjüngen. Der mit der Extrusionsdüse zusammenwirkende Dorn ist jeweils korrespondierend ausgebildet, um bei Bedarf eine Veränderung der Ringspaltweite zu ermöglichen.

## Patentansprüche

1. Extrusionsblasverfahren für Kunststoffbehälter, insbesondere Kunststoffflaschen, bei dem ein ein- oder mehrschichtiger Kunststoffschlauch unter einem vorgegebenen Extrusionsdruck durch einen Ringspalt (8), der von einer an einem Extrusionskopf (4) vorgesehenen Extrusionsdüse (5) und einem vorzugsweise axial verstellbaren Dorn (7) begrenzt und hinsichtlich seiner Weite verstellbar ist, extrudiert, in eine Formkavität (27) einer Blasformwerkzeuganordnung (26) eingebracht und durch Überdruck gemäss der Formkavität (27) zu einem Kunststoffbehälter aufgeblasen und entformt wird, wobei dem extrudierten Kunststoffschlauch in einem Abstand von 2 mm bis 20 mm von der Mündung (52) der Extrusionsdüse (5) bei Bedarf wenigstens bereichsweise zusätzliches Kunststoffmaterial zudosiert wird, welches unter einem gegenüber dem Extrusionsdruck erhöhten Druck durch eine oder mehrere über den Umfang verteilte Abgabedüsen (9) derart in den extrudierten Kunststoffschlauch eingebracht wird, dass das Kunststoffmaterial des extrudierten Schlauchs lokal komprimiert wird und nach dem Passieren der Extrusionsdüse (5) der Kunststoffschlauch an den mit zusätzlichem Kunststoffmaterial versehenen Bereichen eine grössere Wandstärke aufweist als der übrige Kunststoffschlauch.

2. Extrusionsblasverfahren nach Anspruch 1, **dadurch gekennzeichnet, dass** der Druck, mit dem das zusätzliche Kunststoffmaterial in den extrudierten Kunststoffschlauch eingepresst wird, um 20% bis 150% höher liegt als der Extrusionsdruck.

3. Extrusionsblasverfahren nach einem der vorangehenden Ansprüche, **dadurch gekennzeichnet, dass** für die Beimengung von zusätzlichem Kunststoffmaterial mehrere Abgabedüsen (9) vorgesehen sind, die über den Umfang verteilt sind und/oder einen verschieden grossen Abstand von der Mündung der Extrusionsdüse aufweisen.

4. Extrusionsblasverfahren nach einem der vorangehenden Ansprüche, **dadurch gekennzeichnet, dass** der Kunststoffschlauch kontinuierlich extrudiert und das zusätzliche Kunststoffmaterial zeitlich gesteuert aus wenigstens einem im Extrusionskopf (4) vorgesehenen Zwischenspeicher zudosiert wird.

5. Extrusionsblasverfahren nach Anspruch 4, **dadurch gekennzeichnet, dass** das zusätzliche Kunststoffmaterial durch mehrere über den Umfang verteilte und/oder in einem verschieden grossen Abstand von der Mündung der Extrusionsdüse angeordnete Abgabedüsen ausgepresst wird, welche einzeln oder in Gruppen aus verschiedenen Zwischenspeichern mit Kunststoffmaterial versorgt werden.

6. Extrusionsblasverfahren nach Anspruch 5, **dadurch gekennzeichnet, dass** das zusätzliche Kunststoffmaterial in einem oder mehreren ringförmigen Räumen (55) zwischengespeichert wird, der bzw. die in einem Abschnitt (51) des Extrusionskopfes (4) angeordnet ist bzw. sind, der den Dorn (7) umgibt, und dass der bzw. die ringförmige(n) Raum bzw. Räume mit einer oder mehreren zu Gruppen zusammengefassten Abgabedüse(n) (9) verbunden ist.

7. Extrusionsblasverfahren nach einem der vorangehenden Ansprüche, **dadurch gekennzeichnet, dass** der Kunststoffschlauch kontinuierlich mehrschichtig extrudiert wird und wenigstens eine oder mehrere Abgabedüsen vorgesehen sind, die einzelnen der kontinuierlich extrudierten Schichten zugeordnet sind und durch welche der jeweiligen Schicht wenigstens bereichsweise zusätzliches Kunststoffmaterial zudosierbar ist, welches dem Material der jeweiligen Schicht des extrudierten Kunststoffschlauchs entspricht bzw. mit diesem kompatibel ist.

8. Extrusionsblasverfahren nach einem der vorangehenden Ansprüche, **dadurch gekennzeichnet, dass** in Abhängigkeit vom Kunststoffmaterial des ein- oder mehrschichtig extrudierten Kunststoffschlauchs das beigemengte zusätzliche Kunststoffmaterial aus der Gruppe bestehend aus Polyolefinen, Mischungen aus Polyolefinen, thermoplastischem PE, HDPE, LDPE, oder blasbarem PET gewählt wird.

9. Extrusionsblasverfahren nach einem der vorangehenden Ansprüche, **dadurch gekennzeichnet, dass** wenigstens bereichsweise ein Kunststoffmaterial zudosiert wird, dessen Farbe von der Farbe des übrigen Kunststoffschlauchs verschieden ist.

10. Extrusionsblasverfahren nach einem der vorangehenden Ansprüche, **dadurch gekennzeichnet, dass** wenigstens eine der extrudierten Kunststoffschichten Mühlenregeneratmaterial umfasst.

11. Extrusionsblasverfahren nach einem der vorangehenden Ansprüche, **dadurch gekennzeichnet, dass** am Extrusionskopf mehrere Extrusionsdüsen vorgesehen sind, durch welche gleichzeitig mehrere im wesentlichen parallel zueinander angeordnete Kunststoffschläuche ein- oder mehrschichtig extrudiert werden, denen jeweils bei Bedarf schichtspezifisch wenigstens bereichsweise zusätzliches Kunststoffmaterial beigemengt wird, und die extrudierten Kunststoffschläuche an ein Mehrfachwerkzeug übergeben werden, in denen aus den Schlauchabschnitten gleichzeitig mehrere Kunststoffbehälter aufgeblasen werden, die nach ihrer Fertigstellung entformt werden.

## Claims

1. Extrusion blow moulding process for plastics containers, in particular plastics bottles, where a single- or multilayer plastics parison is extruded under a prescribed extrusion pressure through an annular gap (8) which is delimited by an extrusion die (5) provided on an extrusion head (4) and by a preferably axially adjustable mandrel (7) and which has adjustable width, and the said parison is introduced into a mould cavity (27) of a blow-mould arrangement (26) and is blown by superatmospheric pressure in accordance with the mould cavity (27) to give a plastics container, and is demoulded, where, at a distance of from 2 mm to 20 mm from the outgoing end (52) of the extrusion die (5), additional plastics material is added in metered quantity, if necessary, at least in some regions, to the extruded plastics parison, the said material being introduced into the extruded plastics parison through one or more dispenser nozzles (9) distributed around the periphery, at a pressure higher than the extrusion pressure, in a manner such that the plastics material of the extruded parison is locally compressed and after passage through the extrusion die (5) the wall thickness of the plastics parison is greater at the regions provided with additional plastics material than in the remainder of the plastics parison.

2. Extrusion blow moulding process according to Claim 1, **characterized in that** the pressure with which the additional plastics material is injected into the extruded plastics parison is higher by from 20% to 150% than the extrusion pressure.

3. Extrusion blow moulding process according to any of the preceding claims, **characterized in that** for the admixture of additional plastics material there are a plurality of dispenser nozzles (9) provided, distributed around the periphery and/or at a different distance from the outgoing end of the extrusion die.

4. Extrusion blow moulding process according to any of the preceding claims, **characterized in that** the plastics parison is continuously extruded and the additional plastics material is added in metered quantity with controlled timing from at least one intermediate reservoir provided in the extrusion head (4).

5. Extrusion blow moulding process according to Claim 4, **characterized in that** the additional plastics material is discharged under pressure through a plurality of dispenser nozzles distributed around the periphery and/or arranged at a different distance from the outgoing end of the extrusion die, which are supplied individually or in groups with plastics material from various intermediate reservoirs.

6. Extrusion blow moulding process according to Claim 5, **characterized in that** the additional plastics material is held in one or more annular spaces (55) as intermediate reservoir(s) arranged in a section (51) that surrounds the mandrel (7) in the extrusion head (4), and that the annular space(s) has/have connection to one or more dispenser nozzle(s) (9) combined into groups.

7. Extrusion blow moulding process according to any of the preceding claims, **characterized in that** the plastics parison is continuously extruded in a plurality of layers and there is/are at least one, or a plurality of, dispenser nozzle(s) provided which is/are allocated to individual layers of the continuously extruded layers, and through which it is possible to add, in metered quantity, to the respective layer, at least in some regions, additional plastics material which corresponds to, or is compatible with, the material of the respective layer of the extruded plastics parison.

8. Extrusion blow moulding process according to any of the preceding claims, **characterized in that**, as required by the plastics material of the plastics parison extruded in one or more layers, the admixed additional plastics material is selected from the group consisting of polyolefins, mixtures of polyolefins, thermoplastics PE, HDPE, LDPE, and blow-mouldable PET.

9. Extrusion blow moulding process according to any of the preceding claims, **characterized in that**, at least in some regions, a plastics material is added in metered quantity and differs in colour from the colour of the remainder of the plastics parison.

10. Extrusion blow moulding process according to any of the preceding claims, **characterized in that** at least one of the extruded plastics layers comprises regrind material.

11. Extrusion blow moulding process according to any of the preceding claims, **characterized in that** on the extrusion head there are a plurality of extrusion dies provided through which a plurality of plastics parisons arranged in essence parallel to one another are simultaneously extruded in one or more layers, and to each of the said parisons, additional plastics material is admixed if required in layer-specific manner at least in some regions, and the extruded plastics parisons are transferred to a multiple mould in which a plurality of plastics containers are simultaneously blown from the parison sections, and are demoulded after manufacture.

## Revendications

1. Procédé d'extrusion-soufflage pour récipients en matière plastique, en particulier pour bouteilles en matière plastique, selon lequel une gaine tubulaire en matière plastique à une ou plusieurs couches est extrudée avec une pression d'extrusion prédéterminée, à travers un espace annulaire (8) qui est délimité par une filière d'extrusion (5), prévue sur une tête d'extrusion (4), et un poinçon (7), de préférence à déplacement axial, et peut être réglé en largeur, est introduite dans une empreinte (27) d'un outillage de moulage par soufflage (26) et est soufflée par surpression pour former un récipient en matière plastique, conformément à l'empreinte (27), et est démoulée dans lequel, en cas de besoin, on ajoute à la gaine tubulaire extrudée en matière plastique, à une distance comprise entre 2 mm et 20 mm par rapport à l'embouchure (52) de la filière d'extrusion (5), au moins localement de la matière plastique supplémentaire dosée qui est introduite dans la gaine tubulaire extrudée en matière plastique, sous une pression qui est accrue par rapport à la pression d'extrusion, à travers une ou plusieurs filières de distribution (9) réparties sur le pourtour, de manière à ce que la matière plastique de la gaine extrudée soit localement comprimée et, après le passage dans la filière d'extrusion (5), la gaine en matière plastique présente une épaisseur de paroi qui est plus importante dans les zones pourvues de matière plastique supplémentaire que dans le reste de la gaine.

2. Procédé d'extrusion-soufflage selon la revendication 1, **caractérisé en ce que** la pression, avec laquelle la matière plastique supplémentaire est pressée dans la gaine extrudée en matière plastique, est supérieure de 20 % à 150 % à la pression d'extrusion.

3. Procédé d'extrusion-soufflage selon l'une des revendications précédentes, **caractérisé en ce que** pour l'addition de matière plastique supplémentaire, plusieurs filières de distribution (9) sont prévues, qui sont réparties sur le pourtour et/ou présentent des distances différentes par rapport à l'embouchure de la filière d'extrusion.

4. Procédé d'extrusion-soufflage selon l'une des revendications précédentes, **caractérisé en ce que** la gaine en matière plastique est extrudée en continu et la matière plastique supplémentaire est ajoutée de façon dosée et contrôlée dans le temps, à partir d'au moins un réservoir intermédiaire prévu dans la tête d'extrusion (4).

5. Procédé d'extrusion-soufflage selon la revendication 4, **caractérisé en ce que** la matière plastique supplémentaire est expulsée par plusieurs filières de distribution qui sont réparties sur le pourtour et/ou disposées à des distances différentes par rapport à l'embouchure de la filière d'extrusion et qui sont alimentées en matière plastique, individuellement ou par groupes, à partir de différents réservoirs intermédiaires.

6. Procédé d'extrusion-soufflage selon la revendication 5, **caractérisé en ce que** la matière plastique supplémentaire est stockée de façon temporaire dans un ou plusieurs espaces (55) annulaires qui est/sont prévu(s) dans une partie (51) de la tête d'extrusion (4) entourant le poinçon (7), et **en ce que** le ou les espace(s) annulaire(s) est/sont relié(s) à une ou plusieurs filières de distribution (9) rassemblées en groupes.

7. Procédé d'extrusion-soufflage selon l'une des revendications précédentes, **caractérisé en ce que** la gaine en matière plastique est extrudée en continu en plusieurs couches et qu'au moins une ou plusieurs filières de distribution sont prévues qui sont associées à des couches individuelles des couches extrudées en continu et qui permettent d'ajouter au moins localement à la couche concernée, de façon dosée, de la matière plastique supplémentaire qui correspond au matériau de la couche concernée de la gaine tubulaire extrudée en matière plastique ou est compatible avec celui-ci.

8. Procédé d'extrusion-soufflage selon l'une des revendications précédentes, **caractérisé en ce que**, en fonction de la matière plastique de la gaine extrudée en matière plastique en une ou plusieurs couches, la matière plastique supplémentaire ajoutée est choisie dans le groupe comprenant des polyoléfines, des mélanges de polyoléfines, du PE thermoplastique, HDPE, LDPE ou du PET se prêtant au soufflage.

9. Procédé d'extrusion-soufflage selon l'une des revendications précédentes, **caractérisé en ce que** l'on ajoute de façon dosée, au moins localement, une matière plastique dont la couleur est différente de la couleur du reste de la gaine tubulaire en matière plastique.

10. Procédé d'extrusion-soufflage selon l'une des revendications précédentes, **caractérisé en ce qu'**au moins une des couches extrudées en matière plastique comporte du matériau régénéré broyé.

11. Procédé d'extrusion-soufflage selon l'une des revendications précédentes, **caractérisé en ce que** plusieurs filières d'extrusion sont prévues sur la tête d'extrusion, à travers lesquelles plusieurs gaines tubulaires en matière plastique, disposées sensiblement parallèlement les unes aux autres, sont extrudées simultanément en une ou plusieurs couches, gaines auxquelles on ajoute, en cas de besoin, au moins localement et de façon spécifique à chaque couche, de la matière plastique supplémentaire, et les gaines tubulaires en matière plastique extrudées sont transférées à un outillage multiple dans lequel plusieurs récipients en matière plastique sont soufflés simultanément à partir des tronçons de gaine tubulaire, lesquels récipients sont démoulés une fois qu'ils sont terminés.
